# EUROPEAN PATENT SPECIFICATION

(11) **EP 3 042 568 B1**
(45) Date of publication and mention of the grant of the patent: **06.11.2019**
(21) Application number: 14840382.7
(22) Date of filing: 01.09.2014
(51) Int. Cl.: A23G 1/00, A23G 1/30, A23G 1/36, A23G 1/38

(54) **CHOCOLATE**
SCHOKOLADE
CHOCOLAT

(30) Priority: 02.09.2013 JP 2013180836
(43) Date of publication of application: 13.07.2016
(73) Proprietor: The Nisshin OilliO Group, Ltd., Tokyo 104-8285 (JP)
(72) Inventor: OONISHI, Kiyomi, Yokosuka-shi Kanagawa 239-0832 (JP)
(74) Representative: Dennemeyer & Associates S.A.
(86) International application number: PCT/JP2014/004473
(87) International publication number: WO 2015/029454

(56) References cited:
- EP-A2- 0 390 408
- WO-A1-2006/121182
- WO-A2-01/43558
- JP-A- H0 475 593
- JP-A- H1 198 952
- JP-A- H05 311 190
- US-A- 3 796 816
- SHIGEO MAEYAMA ET AL. CHOCOLATE-RUI NO SEIHO 9.4.2 COCOA BUTTER, SEIKA JITEN 20 January 1988, pages 454 - 456, XP008183024

## Description

### TECHNICAL FIELD

### <Cross Reference>

This application claims priority from Japanese Patent Application No. 2013-180836 filed on September 2, 2013.

The present invention relates to a chocolate having soft texture and smooth melting mouthfeel.

### BACKGROUND ART

A chocolate molded into a block or plate shape is often manufactured by adding solid fat having a relatively high melting point as well as cacao butter so that a chocolate product is prevented from loosening and deforming. It is considered that this is largely influenced by the fact that a chocolate product has been commonly exposed to high temperature in the distribution stage of food because the temperature could not be controlled in the distribution stage. However, in recent years, food can be distributed at various temperature zones according to the type of food to be distributed. In brief, concern about melting of chocolate in the distribution stage has been eliminated. Accordingly, the melting point of fats and oils does not need to be consciously set high. As a result, a chocolate with further pleasant melting mouthfeel is being developed.

Furthermore, consumer tastes and preferences are also changing with respect to required texture and melting mouthfeel of a chocolate. Sharp (hard) melting mouthfeel has been appreciated in association with good snap (characteristics of breaking with a sudden sharp noise). However, in recent years, a chocolate with so-called soft texture and melting mouthfeel in harmony with such textures is becoming popular.

As an example of the chocolate with soft initial bite and soft texture, JP-A-3-43042 discloses a soft chocolate containing SUX triglyceride (X indicates saturated fatty acid or unsaturated fatty acid) in which unsaturated fatty acid (U) is linked to the 2-position of triglyceride (triacylglycerol), and saturated fatty acid (S) is linked to at least one of the 1-position and 3-position. This SUX triglyceride has a melting point of 15 to 28°C. However, the chocolate disclosed in the above-described publication is difficult to be molded.

The initial bite of the above-described chocolate is certainly soft. However, since the texture comes to be soft, the melting mouthfeel of the chocolate has become sticky.

US3796816 discloses a hard butter composition used for confectionery coatings, containing glycerol tricaprin, glycerol trilaurin and partial glyceride having longer shelf life.

EP0390408A2 discloses a process for tempering flavoured confectionery compositions, containing reduced calorie fats, resulting in product firmness and mouth melt comparable to cocoa butter based chocolate products.

JPH0475593 discloses triglyceride used for masking hard butter for making chocolate, containing saturated and unsaturated fatty acids at specified conditions, giving butter with strong resistance to fat bloom.

WO20061211182A1 discloses an intermolecular compound for use in food such as chocolate, which comprises disaturated medium chain monosaturated long chain fatty acid triglyceride and 1,3-disaturated long chain 2-monounsaturated long chain fatty acid triglyceride. JPH05311190A discloses a novel agent to prevent graining of fat and oil, e.g. palm fats, which contains triglycerides containing saturated fatty acids of specified carbon chain length.

JPH1198952 discloses new fat and oil content food e.g. chocolate, cream, which comprises medium chain fatty triglyceride and saturated, unsaturated, medium chain fatty acid.

### CITATION LIST

### PATENT LITERATURE

PATENT LITERATURE 1: JP-A-3-43042

### SUMMARY OF THE INVENTION

### PROBLEMS TO BE SOLVED BY THE INVENTION

An object of the present invention is to provide a chocolate that can be molded into shapes of a block, a plate, particles and the like while having soft initial bite textures and smooth melting mouthfeel.

### SOLUTION TO THE PROBLEMS

The present invention is strictly defined by the claims.

The present inventor has conducted extensive studies for solving the above-described problems. As a result, it has been found that the object can be achieved by containing a certain amount of triacylglycerol containing constituent fatty acid of 6 to 10 carbons in fats and oils contained in a chocolate.

The chocolate comprises 25-65 mass% of fats and oils, the fats and oils containing 5-40mass %of triacyglycerol containing fatty acid of 6 to 10 carbons, wherein in the triacylglycerol three fatty acid molecules of 6 to 10 carbons are este-linked to one molecule of glycerol, and constituent fatty acid of 10 carbons is contained in an amount of 10mass% or more, in a total amount of the constituent fatty acid of 6 to 10 carbons contained in the triacylglycerol.

According to a preferred aspect of the present invention, there can be provided a chocolate in which 10 mass% or less of the constituent fatty acid of 6 carbons in the total amount of the constituent fatty acid of 6 to 10 carbons contained in the triacylglycerol.

According to a preferred aspect of the present invention, there can be provided a chocolate in which the above-described fats and oils further contain 45 to 85 mass% of triacylglycerol in which oleic acid is linked to the 2-position and saturated fatty acid of 16 or more carbons is linked to the 1-position and the 3-position.

According to a preferred embodiment of the present invention, there can be provided a chocolate in which 60 mass% or less of 1,3-distearoyl-2-oleoylglycerol is contained in the triacylglycerol that is contained in the above-described fats and oils and contains oleic acid linked to the 2-position and saturated fatty acid of 16 or more carbons linked to the 1-position and the 3-position.

According to a preferred aspect of the present invention, there can be provided the above-described chocolate that is subjected to a tempering treatment.

According to a preferred embodiment of the present invention, there can be provided the above-described chocolate that is molded.

Furthermore, according to another aspect of the present invention, there can be provided a method of manufacturing a chocolate, including: performing a tempering treatment to a melted chocolate prepared so as to contain 25 to 65 mass% of fats and oils, the fats and oils containing 5 to 40 mass% of triacylglycerol containing constituent fatty acid of 6 to 10 carbons; and subsequently cooling and solidifying the tempered chocolate, wherein in the triacylglycerol three fatty acid molecules of 6 to 10 carbons are este-linked to one molecule of glycerol, and constituent fatty acid of 10 carbons is contained in an amount of 10mass% or more, in a total amount of the constituent fatty acid of 6 to 10 carbons contained in the triacylglycerol.

According to further another aspect of the present invention, there can be provided a method of manufacturing a molded chocolate, including: filling in a mold a melted chocolate prepared so as to contain 25 to 65 mass% of fats and oils, the fats and oils containing 5 to 40 mass% of triacylglycerol containing constituent fatty acid of 6 to 10 carbons, cooling and solidifying the filled chocolate, and subsequently removing the solidified chocolate from the mold; or cooling and solidifying the melted chocolate into a plate-like shape with a thickness of 3 to 12 mm, and subsequently cutting the solidified chocolate, wherein in the triacylglycerol three fatty acid molecules of 6 to 10 carbons are este-linked to one molecule of glycerol, and constituent fatty acid of 10 carbons is contained in an amount of 10mass% or more, in a total amount of the constituent fatty acid of 6 to 10 carbons contained in the triacylglycerol.

### EFFECT OF THE INVENTION

According to the present invention, there can be provided a chocolate that has soft initial bite texture and smooth melting mouthfeel while being capable of being molded into shapes of a block, a plate, particles and the like.

### DESCRIPTION OF EMBODIMENTS

### Definition and Analysis

As described herein, triacylglycerol (hereinafter, also indicated by TAG) is an ester compound having a molecular structure in which three fatty acid molecules are ester-linked to one molecule of glycerol. The 1-position, 2-position, and 3-position of TAG indicate the positions of carbon atoms of glycerol to which fatty acid is linked. It is noted that abbreviations of the constituent fatty acid contained in TAG are as follows. A: arachidic acid, O: oleic acid, P: palmitic acid, S: saturated fatty acid having 16 or more carbons, St: stearic acid, and U: unsaturated fatty acid having 16 or more carbons. Here, the "constituent fatty acid contained in TAG" means fatty acid from which each of three acyl groups constituting the TAG molecule is derived.

The composition of triacylglycerol contained in fats and oils can be analyzed by gas chromatography (in accordance with JAOCS, vol 70, 11, 1111-1114 (1993)) and silver ion column-HPLC (in accordance with J. High Resol. Chromatogr., 18, 105-107 (1995)).

The constituent fatty acid of fats and oils can be analyzed by gas chromatography (in accordance with AOCS Celf-96).

The chocolate according to the present invention will be described in order below.

As described herein, a chocolate is not limited to the chocolate defined in "Fair Competition Codes concerning Labeling on Chocolates" (Japan Chocolate Industry Fair Trade Conference) or laws and regulations. The chocolate according to the present invention includes edible fats and saccharides as a main raw material. Cacao components (cacao mass, cocoa powder, and the like), dairy products, flavors, or emulsifiers are added to the main raw material as necessary. Such chocolate is manufactured through chocolate manufacturing processes (all or some of mixing process, refining process, conching process, molding process, cooling process, and the like). Also, the chocolate according to the present invention includes white chocolate and color chocolate as well as dark chocolate and milk chocolate.

The chocolate according to the present invention contains 25 to 65 mass% of fats and oils. The content of fats and oils in the chocolate according to the present invention is preferably 28 to 60 mass%, and more preferably 30 to 55 mass%. It is noted that the fats and oils in the chocolate according to the present invention include fats and oils (cocoa butter, milk fat, and the like) derived from oil-containing raw materials (cacao mass, cocoa powder, whole milk powder, and the like), other than the formulated fats and oils. For example, in general, the content (oil percentage) of fats and oils (cocoa butter) in cacao mass is 55 mass%; the content (oil percentage) of fats and oils (cocoa butter) in cocoa powder is 11 mass%; and the content (oil percentage) of fats and oils (milk fat) in whole milk powder is 25 mass%. Therefore, the content of fats and oils in the chocolate comes to be a sum of the values each obtained by multiplying a formulated amount (mass%) of each raw material in the chocolate by the oil percentage.

The fats and oils contained in the chocolate according to the present invention contain 5 to 40 mass% of triacylglycerol (hereinafter, also indicated by MCT) containing constituent fatty acid of 6 to 10 carbons. That is, MCT is triacylglycerol in which three fatty acid molecules of 6 to 10 carbons are ester-linked to one molecule of glycerol. These three types of fatty acid may be the same or may be different. Furthermore, MCT may be a mixture of a plurality of different compounds. An example of such a mixture may include a mixture of trioctanoyl glycerol and tridecanoyl glycerol. The constituent fatty acid of 6 to 10 carbons is preferably linear saturated fatty acid. The content of MCT in the fats and oils contained in the chocolate is preferably 10 to 35 mass%, more preferably 10 to 32 mass%, and further preferably 15 to 30 mass%. When the content of MCT in the fats and oils contained in the chocolate falls in the above-described range, there can be obtained a chocolate having soft initial bite texture and smooth melting mouthfeel.

The fats and oils used in the chocolate according to the present invention contain MCT. In the total amount of the constituent fatty acid contained in this MCT, the constituent fatty acid of 6 carbons is contained in an amount of preferably 10 mass% or less. Furthermore, in the total amount of the constituent fatty acid contained in the above-described MCT, the constituent fatty acid of 10 carbons is contained in an amount of preferably 10 mass% or more. The constituent fatty acid of 6 carbons is contained in an amount of preferably 5 mass% or less. The constituent fatty acid of 10 carbons is contained in an amount of more preferably 20 mass% or more, further preferably 40 mass% or more, and most preferably 60 mass% or more. When the composition of MCT contained in the fats and oils contained in the chocolate according to the present invention falls within the above-described range, there can be obtained a chocolate having soft initial bite texture and smooth melting mouthfeel. In addition, such a chocolate is easily molded into a block-like, plate-like, and particle-like shape or the like.

An example of a preferred embodiment of the chocolate according to the present invention may include a chocolate in which the below-described MCT is contained in an amount of 5 to 40 mass% in the fats and oils contained in the chocolate. That is, octanoic acid (8 carbons) or decanoic acid (10 carbons) constitutes 95 mass% or more of the total amount of the constituent fatty acid contained in this MCT. Furthermore, the mass ratio between the octanoic acid and the decanoic acid each being the constituent fatty acid falls within the range of 80 : 20 to 0 : 100.

The MCT contained in fats and oils contained in the chocolate according to the present invention can be manufactured by a known method. An example of such a known method includes heating fatty acid of 6 to 10 carbons and glycerol to 120 to 180°C and dehydrating and condensing the heated product. This condensation reaction is preferably performed under reduced pressure. A catalyst can be used in the above-described condensation reaction. However, the condensation reaction is preferably performed without a catalyst.

In the chocolate according to the present invention, the content of fats and oils in the chocolate and the content of triacylglycerol containing constituent fatty acid of 6 to 10 carbons in the fats and oils satisfy the above-described ranges. As long as these conditions are satisfied, any fats and oils raw material may be used for manufacturing the chocolate according to the present invention. Examples of a usable fats and oils raw material may include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, cocoa butter, mixed oil thereof, and processed fats and oils thereof.

The chocolate according to the present invention is suitable for a tempered-type chocolate. The fats and oils contained in the chocolate preferably contain, in addition to the MCT, SOS-type triacylglycerol (hereinafter, also indicated as SOS) in which oleic acid is linked to the 2-position and saturated fatty acid of 16 or more carbons is linked to the 1-position and the 3-position. The content of the SOS in the fats and oils contained in the chocolate is preferably 45 to 85 mass%, more preferably 50 to 80 mass%, further preferably 55 to 75 mass%, and most preferably 55 to 70 mass%. The saturated fatty acid of 16 or more carbons linked to the 1-position and the 3-position of the SOS may not be necessarily the same saturated fatty acid. The number of carbons in the saturated fatty acid linked to each of the 1-position and the 3-position is preferably 16 to 26, and more preferably 16 to 22. Furthermore, saturated fatty acid of 16 to 18 carbons constitutes preferably 90 mass% or more, and more preferably 95 mass% or more, of the total amount of constituent fatty acid S contained in used SOS. When the content of the SOS in the fats and oils contained in the chocolate falls in the above-described range, molding into a block-like, plate-like and particle-like shapes, and the like is facilitated.

Fats and oils abundantly containing SOS (fats and oils containing SOS in an amount of 40 mass% or more, and preferably in an amount of 60 mass% or more) are preferably used as fats and oils to be contained in the chocolate, so that the fats and oils contained in the chocolate according to the present invention contain the above-described SOS-type triacylglycerol. Examples of the fats and oils abundantly containing SOS (hereinafter, also indicated by SOS fats and oils) may include cocoa butter, palm oil, shea butter, sal fat, allanblackia fat, mowrah fat, illipe butter, mango kernel oil, and fractionated oils thereof. Furthermore, as having been already known, there may be used fats and oils obtained by performing a transesterification reaction between palmitic acid, stearic acid, or lower alcohol esters thereof and high oleic acid fats and oils such as high oleic sunflower oil with the 1,3-positions selective lipase product and thereafter fractionating the reaction product as necessary.

The fats and oils contained in the chocolate according to the present invention may contain, as one type of the SOS-type triacylglycerol, StOSt-type triacylglycerol (1,3-distearoyl-2-oleoylglycerol, hereinafter, also indicated by StOSt) in which oleic acid is linked to the 2-position, and stearic acid is linked to the 1-position and the 3-position. The content of StOSt in the SOS contained in the fats and oils included in the chocolate is preferably 60 mass% or less, more preferably 50 mass% or less, and further preferably 20 to 40 mass%. When the content of StOSt in the above-described SOS falls in the above-described range, a chocolate having smooth melting mouthfeel is likely to be obtained.

An example of a preferred embodiment of the chocolate according to the present invention may include a chocolate containing fats and oils having the following specific composition. In this fats and oils, the mass ratio between the content of triacylglycerol (MCT) containing constituent fatty acid of 6 to 10 carbons and the content of fats and oils abundantly containing SOS is 5 : 95 to 40 : 60.

The chocolate according to the present invention preferably contains saccharides other than fats and oils. Examples of usable saccharides may include sucrose (sugar and powder sugar), lactose, glucose, fructose, maltose, reduced saccharified starch, liquid sugar, enzymatically converted starch syrup, isomerized liquid sugar, sucrose-linked starch syrup, reducing sugar polydextrose, oligosaccharide, sorbitol, reduced lactose, trehalose, xylose, xylitose, maltitol, erythritol, mannitol, raffinose, and dextrin. The content of saccharides in the chocolate according to the present invention is preferably 20 to 60 mass%, more preferably 25 to 55 mass%, and further preferably 30 to 50 mass%.

Raw materials commonly formulated in chocolate can be used other than fats and oils and saccharides in the chocolate according to the present invention. Specific examples of usable raw materials may include dairy products such as whole milk powder and skim milk, cacao components such as cacao mass and cocoa powder, soy flour, soy protein, processed fruit products, processed vegetable products, various powders such as green tea powder and coffee powder, gums, starches, emulsifiers, antioxidants, colorants, and flavors.

The chocolate according to the present invention can be manufactured by a known method. Examples of the raw material usable in manufacturing the chocolate according to the present invention may include fats and oils, cacao components, saccharides, dairy products, and emulsifiers. The chocolate according to the present invention can be manufactured through a mixing process, refining process, conching process, and cooling process such that the content of fats and oils in the chocolate according to the present invention finally reaches 25 to 65 mass%. Especially, it is preferred to perform a tempering treatment after the conching process, and then perform cooling and solidification in order to obtain a tempered-type chocolate.

The tempering treatment which is a preferred embodiment in the process for manufacturing the chocolate according to the present invention is an operation for generating crystal nuclei of stable crystals of fats and oils in the chocolate that is in a melted state (a state in which fats and oils crystals are completely melted). By this operation, the SOS-type triacylglycerol contained in the fats and oils contained in the chocolate can be solidified as stable crystals. As an example of such an operation, the product temperature of the chocolate being in a melted state at 40 to 50°C is lowered to approximately 26 to 29°C, and thereafter the temperature is increased approximately 28 to 31°C again. Alternatively, seeding treatment may be performed in place of tempering treatment. The seeding treatment may be performed by, for example, using a seed agent which is a stable crystal of the SOS-type triacylglycerol such as StOSt and BOB (1,3-dibehenoyl-2-oleoylglycerol). That is, instead of tempering treatment, 0.05 to 5 mass% of a seed agent may be added (a seeding treatment) to the fats and oils in the chocolate at a temperature that prevents the stable crystal as the seed agent from completely melting.

The chocolate according to the present invention is a chocolate that can be molded into a block-like, plate-like, and particle-like shape or the like. Such molding can be performed in the above-described cooling process by solidifying a melted chocolate filled in a mold and thereafter removing the solidified chocolate from the mold, cutting cooled and solidified chocolate into a plate-like shape, or squeezing chocolate. When the chocolate according to the present invention is cooled and solidified into a plate-like shape, the thickness thereof is preferably 3 to 12 mm, and more preferably 4 to 10 mm. The chocolate cooled and solidified into a plate-like shape can be cut into pieces having a desired size and shape such as a cube and a rectangular parallelepiped, using a cut blade or the like.

The chocolate according to the present invention has a hardness enabling the above-described molding while having soft initial bite textures and quick and smooth melting mouthfeel. The chocolate according to the present invention is edible as a chocolate lump having been removed from a mold or cut. Furthermore, the chocolate according to the present invention can be used as coating materials, filling materials, or chip materials to be mixed into dough for bread baking products such as bread, cakes, western confectionery, baked confectionery, doughnuts, and cream puffed cakes.

### EXAMPLES

Next, the present invention will be further described in detail with reference to examples and comparative examples. The present invention is not limited to these examples and comparative examples.

As described herein, "%" means mass% unless specifically indicated.

The composition of triglyceride in fats and oils was analyzed by gas chromatography (in accordance with JAOCS, vol 70, 11, 1111-1114 (1993)) and silver ion column-HPLC (in accordance with J. High Resol. Chromatogr., 18, 105-107 (1995)).

The constituent fatty acid contained in TAG contained in fats and oils was analyzed by gas chromatography (in accordance with AOCS Celf-96).

### <Raw material fats and oils>

[MCT 1]: As MCT 1, there was used MCT (manufactured in-house by The Nisshin OilliO Group, Ltd.) in which only n-octanoic acid (8 carbons) or n-decanoic acid (10 carbons) is contained as constituent fatty acid, and a mass ratio between the above-described n-octanoic acid and the above-described n-decanoic acid is 75 : 25.
[MCT 2]: As MCT 2, there was used MCT (manufactured in-house by The Nisshin OilliO Group, Ltd.) in which only n-octanoic acid (8 carbons) or n-decanoic acid (10 carbons) is contained as constituent fatty acid, and a mass ratio between the above-described n-octanoic acid and the above-described n-decanoic acid is 30 : 70.

[SOS fats and oils 1]: As SOS fats and oils 1, there was used cocoa butter (manufactured by DAITO CACAO CO., LTD., SOS content: 85.3%, StOSt content: 28.6%, 95 mass% or more of the total amount of constituent fatty acid S contained in SOS is P or St).
[SOS fats and oils 2]: Transesterification was performed between high oleic sunflower oil and stearic acid ethyl ester with 1,3-positions specific lipase. Accordingly, the reaction was performed such that stearic acid is linked to the 1-position or 3-position of triacylglycerol. The fats and oils (manufactured in-house by The Nisshin OilliO Group, Ltd., SOS content: 84.8%, StOSt content: 71.2%, 95 mass% or more of the total amount of constituent fatty acid S contained in SOS is P or St) obtained by fractionating this transesterified oil to increase the concentration of SOS-type triacylglycerol were used as SOS fats and oils 2.
[SOS fats and oils 3]: As SOS fats and oils 3, there was used a palm mid fraction (manufactured in-house by The Nisshin OilliO Group, Ltd., SOS content: 77.4%, StOSt content: 1.5%, 95 mass% or more of the total amount of constituent fatty acid S contained in SOS is P or St).

### <Manufacture 1 of chocolate>

Chocolates of Examples 1 to 5 and Comparative Examples 1 to 3 were manufactured with raw materials formulated in accordance with the formulations of Tables 1 and 2. That is, melted chocolates having passed through the processes of mixing, refining, and conching were subjected to a tempering treatment (seeding treatment) according to a method known in the art. The treated liquid chocolates were cooled and solidified in molds.

**[Table 1]**

| [Table 1] Formulation and Evaluation of Chocolates | | | | | |
|---|---|---|---|---|---|
| | Example 1 | Example 2 | Example 3 | Example 4 | Example 5 |
| Formulation of raw materials (%) | | | | | |
| MCT 1 | 5.0 | 10.38 | 15.2 | - | 12.22 |
| MCT 2 | - | - | - | 10.38 | - |
| SOS fats and oils 1 | 15.75 | 10.37 | 5.55 | - | - |
| SOS fats and oils 2 | - | - | - | - | 8.53 |
| SOS fats and oils 3 | - | - | - | 10.37 | - |
| Cacao mass | 35.0 | 35.0 | 35.0 | 35.0 | 35.0 |
| Powder sugar (sugar) | 43.7 | 43.7 | 43.7 | 43.7 | 43.7 |
| Lecithin | 0.5 | 0.5 | 0.5 | 0.5 | 0.5 |
| Flavors | 0.05 | 0.05 | 0.05 | 0.05 | 0.05 |
| Total of raw materials | 100 | 100 | 100 | 100 | 100 |
| Content of fats and oils | 40.0 | 40.0 | 40.0 | 40.0 | 40.0 |

| TAG composition in fats and oils (%) | | | | | |
|---|---|---|---|---|---|
| MCT | 12.5 | 26.0 | 38.0 | 26.0 | 30.6 |
| SOS | 74.6 | 63.2 | 52.9 | 61.1 | 59.0 |
| StOSt in SOS (%) | 33.5 | 33.5 | 33.5 | 23.1 | 49.0 |

| Evaluation results | | | | | |
|---|---|---|---|---|---|
| Removal from mold | Excellent | Excellent | Good | Excellent | Excellent |
| Initial bite | Good | Excellent | Fair | Excellent | Good |
| Melting mouthfeel | Good | Excellent | Good | Excellent | Good |

**[Table 2]**

| [Table 2] Formulation and Evaluation of Chocolates | | | |
|---|---|---|---|
| | Comparative Example 1 | Comparative Example 2 | Comparative Example 3 |
| Formulation of raw materials (%) | | | |
| MCT 1 | - | 1.0 | 20.75 |
| MCT 2 | - | - | - |
| SOS fats and oils 1 | 20.75 | 19.75 | - |
| SOS fats and oils 2 | - | - | - |
| Cacao mass | 35.0 | 35.0 | 35.0 |
| Cocoa powder | | | |
| Powder sugar (sugar) | 43.7 | 43.7 | 43.7 |
| Lecithin | 0.5 | 0.5 | 0.5 |
| Flavors | 0.05 | 0.05 | 0.05 |
| Total of raw materials | 100 | 100 | 100 |
| Content of fats and oils TAG composition in fats and oils (%) | 40.0 | 40.0 | 40.0 |
| MCT | 0.0 | 2.5 | 51.9 |
| SOS | 85.3 | 83.2 | 41.0 |
| StOSt in SOS (%) | 33.5 | 33.5 | 33.5 |

| Evaluation results | | | |
|---|---|---|---|
| Removal from mold | Excellent | Excellent | Poor |
| Initial bite | Somewhat fair | Somewhat fair | Poor |
| Melting mouthfeel | Somewhat fair | Somewhat fair | Fair |

### <Evaluation 1 of chocolate>

The chocolates of Examples 1 to 5 and Comparative Examples 1 to 3 manufactured by the above-described method were evaluated for removal from the mold, initial bite, and melting mouthfeel in accordance with the following evaluation criteria.

### <Evaluation method of chocolate>

### (1) Evaluation method of removal from mold

Release from the mold after cooling and solidification at 10°C
Excellent: Very favorable (almost entirely peeled)
Good: Favorable (slightly adhered)
Somewhat fair: Partly not peeled
Poor: Not peeled

### (2) Evaluation method of initial bite

In accordance with the following criteria, evaluation was comprehensively performed by five panelists.
Excellent: Very soft, and no sense of adhesion to teeth
Good: Soft, and no sense of adhesion to teeth
Fair: Somewhat soft, and no sense of adhesion to teeth; or very soft, but some sense of adhesion to teeth
Somewhat fair: Moderate hardness
Poor: Hard; or very soft, but strong sense of adhesion to teeth

### (3) Evaluation method of melting mouthfeel

In accordance with the following criteria, evaluation was comprehensively performed by five panelists.
Excellent: Smooth melting mouthfeel with a previously unknown sense, and very favorable
Good: Smooth melting mouthfeel with a previously unknown sense, and favorable
Fair: Smooth melting mouthfeel
Somewhat fair: Moderate melting mouthfeel
Poor: Bad melting mouthfeel

### <Manufacture 2 of chocolate>

In manufacturing each of the chocolates of Examples 2 and 4 as well as Comparative Example 1, the tempering treatment (seeding treatment) was followed by vertical and horizontal cutting of the cooled and solidified plate-like chocolate with a thickness of 7 mm into block-like pieces using a long-blade kitchen knife. As a result, the chocolate of Comparative Example 1 was broken into pieces. On the other hand, even a crack or the like was not observed on ruptured surfaces of the cut pieces of the chocolates of Examples 2 and 4. This demonstrated that the chocolates of Examples 2 and 4 described above are a chocolate that is also suitable for the process of cutting.

Furthermore, the cut chocolates of Examples 2 and 4 were dusted with cocoa powder, and the dusted chocolates were eaten. The result was that the initial bite was soft, chocolate flavor gently spread in the mouth and then quickly disappeared, and the chocolate tasted very good.

Furthermore, the chocolate according to the present invention may be the following first to sixth chocolates.
The first chocolate is a chocolate containing a fats and oils content of 25 to 65 mass% and containing in the fats and oils 5 to 40 mass% of triacylglycerol containing constituent fatty acid constituted by fatty acid of 6 to 10 carbons.
In the second chocolate according to the first chocolate, in the triacylglycerol containing constituent fatty acid constituted by fatty acid of 6 to 10 carbons, the content of fatty acid of 6 carbons is 10 mass% or less, and the content of fatty acid of 10 carbons is 10 mass% or more.
The third chocolate according to the first or second chocolate has an SOS content of 45 to 85 mass% in the fats and oils. Here, the SOS is triacylglycerol in which oleic acid is linked to the 2-position, and saturated fatty acid of 16 or more carbons is linked to the 1,3-positions.
In the fourth chocolate according to any of the first to third chocolates, the StOSt content in the SOS content in the fats and oils is 60 mass% or less. Here, the StOSt is 1,3-distearoyl-2-oleoylglycerol.
The fifth chocolate according to any of the first to fourth chocolates is subjected to a tempering treatment.
The sixth chocolate according to any of the first to fifth chocolates is molded.

Furthermore, the method of manufacturing a chocolate according to the present invention may be the following first and second methods of manufacturing a chocolate.
The first method of manufacturing a chocolate includes: performing a tempering treatment to a melted chocolate having a fats and oils content of 25 to 65 mass%, the fats and oils being adjusted to contain 5 to 40 mass% of triacylglycerol containing constituent fatty acid constituted by fatty acid of 6 to 10 carbons; and thereafter cooling and solidifying the tempered chocolate.
The second method of manufacturing a chocolate includes: filling in a mold a melted chocolate having a fats and oils content of 25 to 65 mass%, the fats and oils being adjusted to contain 5 to 40 mass% of triacylglycerol containing constituent fatty acid constituted by fatty acid of 6 to 10 carbons, cooling and solidifying the filled chocolate, and removing the solidified chocolate from the mold; or cooling and solidifying a melted chocolate into a plate-like shape with a thickness of 3 to 12 mm and cutting the solidified chocolate.

## Claims

1. A chocolate comprising 25 to 65 mass% of fats and oils, the fats and oils containing 5 to 40 mass% of triacylglycerol containing constituent fatty acid of 6 to 10 carbons, wherein in the triacylglycerol three fatty acid molecules of 6 to 10 carbons are ester-linked to one molecule of glycerol, and constituent fatty acid of 10 carbons is contained in an amount of 10 mass% or more, in a total amount of the constituent fatty acid of 6 to 10 carbons contained in the triacylglycerol.

2. The chocolate according to claim 1, wherein constituent fatty acid of 6 carbons is contained in an amount of 10 mass% or less in a total amount of the constituent fatty acid of 6 to 10 carbons contained in the triacylglycerol.

3. The chocolate according to claim 1 or 2, wherein the fats and oils further contain 45 to 85 mass% of triacylglycerol in which oleic acid is linked to 2-position and saturated fatty acid of 16 or more carbons is linked to 1-position and 3-position.

4. The chocolate according to claim 3, wherein a content of 1,3-distearoyl-2-oleoylglycerol in the triacylglycerol is 60 mass% or less.

5. The chocolate according to any one of claims 1 to 4, the chocolate being subjected to a tempering treatment or a seeding treatment.

6. The chocolate according to any one of claims 1 to 5, the chocolate being molded.

7. A method of manufacturing a chocolate, comprising:
performing a tempering treatment to a melted chocolate prepared so as to contain 25 to 65 mass% of fats and oils, the fats and oils containing 5 to 40 mass% of triacylglycerol containing constituent fatty acid of 6 to 10 carbons; and
subsequently cooling and solidifying the tempered chocolate, wherein in the triacylglycerol three fatty acid molecules of 6 to 10 carbons are ester-linked to one molecule of glycerol, and constituent fatty acid of 10 carbons is contained in an amount of 10 mass% or more, in a total amount of the constituent fatty acid of 6 to 10 carbons contained in the triacylglycerol.

8. A method of manufacturing a molded chocolate, comprising:
filling in a mold a melted chocolate prepared so as to contain 25 to 65 mass% of fats and oils, the fats and oils containing 5 to 40 mass% of triacylglycerol containing constituent fatty acid of 6 to 10 carbons, cooling and solidifying the filled chocolate, and subsequently removing the solidified chocolate from the mold; or
cooling and solidifying the melted chocolate into a plate-like shape with a thickness of 3 to 12 mm, and subsequently cutting the solidified chocolate, wherein in the triacylglycerol three fatty acid molecules of 6 to 10 carbons are ester-linked to one molecule of glycerol, and constituent fatty acid of 10 carbons is contained in an amount of 10 mass% or more, in a total amount of the constituent fatty acid of 6 to 10 carbons contained in the triacylglycerol.

## Patentansprüche

1. Schokolade, umfassend 25 bis 65 Massen-% Fette und Öle, wobei die Fette und Öle 5 bis 40 Massen-% Triacylglycerin enthalten, das eine konstituierende Fettsäure mit 6 bis 10 Kohlenstoffen enthält, wobei in dem Triacylglycerin drei Fettsäuremoleküle mit 6 bis 10 Kohlenstoffen an ein Glycerinmolekül estergebunden sind, und eine konstituierende Fettsäure mit 10 Kohlenstoffen in einer Menge von 10 Massen-% oder mehr in einer Gesamtmenge der konstituierenden Fettsäure mit 6 bis 10 Kohlenstoffen, die im Triacylglycerin enthalten ist, enthalten ist.

2. Schokolade nach Anspruch 1, wobei eine konstituierende Fettsäure mit 6 Kohlenstoffen in einer Menge von 10 Massen-% oder weniger in einer Gesamtmenge der konstituierenden Fettsäure mit 6 bis 10 Kohlenstoffen, die im Triacylglycerin enthalten ist, enthalten ist.

3. Schokolade nach Anspruch 1 oder 2, wobei die Fette und Öle ferner 45 bis 85 Massen-% Triacylglycerin enthalten, in dem Ölsäure an 2-Position gebunden ist und gesättigte Fettsäure mit 16 oder mehr Kohlenstoffen an 1-Position und 3-Position gebunden ist.

4. Schokolade nach Anspruch 3, wobei ein Gehalt an 1,3-Distearoyl-2-oleoylglycerin im Triacylglycerin 60 Massen-% oder weniger beträgt.

5. Schokolade nach einem der Ansprüche 1 bis 4, wobei die Schokolade einer Temperierbehandlung oder einer Impfbehandlung unterzogen wird.

6. Schokolade nach einem der Ansprüche 1 bis 5, wobei die Schokolade geformt wird.

7. Verfahren zur Herstellung einer Schokolade, umfassend:
Durchführen einer Temperierbehandlung an einer geschmolzenen Schokolade, die so hergestellt ist, dass sie 25 bis 65 Massen-% Fette und Öle enthält, wobei die Fette und Öle 5 bis 40 Massen-% Triacylglycerin enthalten, das eine konstituierende Fettsäure mit 6 bis 10 Kohlenstoffen enthält; und
anschließendes Abkühlen und Verfestigen der temperierten Schokolade, wobei in dem Triacylglycerin drei Fettsäuremoleküle mit 6 bis 10 Kohlenstoffen an ein Glycerinmolekül estergebunden sind und die konstituierende Fettsäure mit 10 Kohlenstoffen in einer Menge von 10 Massen-% oder mehr in einer Gesamtmenge der konstituierenden Fettsäure mit 6 bis 10 Kohlenstoffen, die im Triacylglycerin enthalten ist, enthalten ist.

8. Verfahren zur Herstellung einer geformten Schokolade, umfassend:
Einfüllen in eine Form einer geschmolzenen Schokolade, die so hergestellt ist, dass sie 25 bis 65 Massen-% Fette und Öle enthält, wobei die Fette und Öle 5 bis 40 Massen-% Triacylglycerin mit einer konstituierenden Fettsäure mit 6 bis 10 Kohlenstoffen enthalten, Abkühlen und Verfestigen der eingefüllten Schokolade und anschließend Entfernen der verfestigten Schokolade aus der Form; oder
Abkühlen und Verfestigen der geschmolzenen Schokolade zu einer tellerartigen Form mit einer Dicke von 3 bis 12 mm und anschließend Schneiden der verfestigten Schokolade, wobei im Triacylglycerin drei Fettsäuremoleküle mit 6 bis 10 Kohlenstoffen an ein Glycerinmolekül estergebunden sind und eine konstituierende Fettsäure mit 10 Kohlenstoffen in einer Menge von 10 Massen-% oder mehr in einer Gesamtmenge der konstituierenden Fettsäure mit 6 bis 10 Kohlenstoffen, die im Triacylglycerin enthalten ist, enthalten ist.

## Revendications

1. Chocolat comprenant de 25 à 65 % en masse de graisses et d'huiles, les graisses et huiles contenant de 5 à 40 % en masse de triacylglycérol contenant un acide gras constitutif ayant 6 à 10 atomes de carbone, dans lequel dans le triacylglycérol, trois molécules d'acide gras ayant 6 à 10 atomes de carbone sont liés par une liaison ester à une molécule de glycérol et un acide gras constitutif ayant 10 atomes de carbone est contenu en une quantité de 10 % en masse ou plus, dans une quantité totale de l'acide gras constitutif ayant 6 à 10 atomes de carbone contenu dans le triacylglycérol.

2. Chocolat selon la revendication 1, dans lequel l'acide gras constitutif ayant 6 atomes de carbone est contenu en une quantité de 10% en masse ou moins dans une quantité totale de l'acide gras constitutif ayant 6 à 10 atomes de carbone contenu dans le triacylglycérol.

3. Chocolat selon la revendication 1 ou 2, dans lequel les graisses et les huiles contiennent en outre 45 à 85 % en masse de triacylglycérol dans lequel l'acide oléique est lié en position 2 et un acide gras saturé ayant 16 atomes de carbone ou plus est lié en position 1 et en position 3.

4. Chocolat selon la revendication 3, dans lequel une teneur du triacylglycérol en 1,3-distéaroyl-2-oléoylglycérol est de 60 % en masse ou moins.

5. Chocolat selon l'une quelconque des revendications 1 à 4, le chocolat étant soumis à un traitement de tempérage ou à un traitement d'ensemencement.

6. Chocolat selon l'une quelconque des revendications 1 à 5, le chocolat étant moulé.

7. Procédé de fabrication d'un chocolat, comprenant :
la réalisation d'un traitement de tempérage sur un chocolat fondu préparé de manière à contenir de 25 à 65 % en masse de graisses et d'huiles, les graisses et huiles contenant de 5 à 40 % en masse de triacylglycérol contenant un acide gras constitutif ayant 6 à 10 atomes de carbone ; et
le refroidissement et la solidification ultérieurs du chocolat tempéré, dans lequel, dans le triacylglycérol, trois molécules d'acide gras ayant 6 à 10 atomes de carbone sont liées par une liaison ester à une molécule de glycérol et l'acide gras constitutif ayant 10 atomes de carbone est contenu en une quantité de 10 % en masse ou plus, dans une quantité totale de l'acide gras constitutif ayant 6 à 10 atomes de carbone contenu dans le triacylglycérol.

8. Procédé de fabrication d'un chocolat moulé, comprenant :
le coulage dans un moule d'un chocolat fondu préparé de manière à contenir de 25 à 65 % en masse de graisses et d'huiles, les graisses et huiles contenant de 5 à 40 % en masse de triacylglycérol contenant un acide gras constitutif ayant 6 à 10 atomes de carbone, le refroidissement et la solidification du chocolat coulé et ensuite le retrait du chocolat solidifié du moule ; ou
le refroidissement et la solidification du chocolat fondu sous forme de plaque d'une épaisseur de 3 à 12 mm, puis la découpe du chocolat solidifié, dans lequel, dans le triacylglycérol, trois molécules d'acide gras ayant 6 à 10 atomes de carbone sont liées par une liaison ester à une molécule de glycérol et un acide gras constitutif ayant 10 atomes de carbone est contenu en une quantité de 10 % en masse ou plus, dans une quantité totale de l'acide gras constitutif ayant 6 à 10 atomes de carbone contenu dans le triacylglycérol.
